(19) **Europäisches Patentamt / European Patent Office / Office européen des brevets**

(11) **EP 4 711 801 A1**

(12) # EUROPEAN PATENT APPLICATION

(43) Date of publication:
**18.03.2026 Bulletin 2026/12**

(21) Application number: **25197248.5**

(22) Date of filing: **21.08.2025**

(51) International Patent Classification (IPC):
*G01S 7/00* (2006.01)   *G01S 7/02* (2006.01)
*G01S 7/48* (2006.01)   *G01S 13/34* (2006.01)
*G01S 13/46* (2006.01)   *G01S 13/72* (2006.01)
*G01S 13/87* (2006.01)   *G01S 13/931* (2020.01)
*G01S 17/34* (2020.01)   *G01S 17/48* (2006.01)
*G01S 17/66* (2006.01)   *G01S 17/87* (2020.01)
*G01S 17/931* (2020.01)   *G01S 13/58* (2006.01)
*G01S 17/58* (2006.01)

(52) Cooperative Patent Classification (CPC):
**G01S 7/003; G01S 7/021; G01S 7/4804;**
**G01S 13/343; G01S 13/46; G01S 13/723;**
**G01S 13/87; G01S 13/931; G01S 17/34;**
**G01S 17/48; G01S 17/66; G01S 17/87;**
**G01S 17/931;** G01S 13/584; G01S 17/58;   (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **11.09.2024 US 202418882070**

(71) Applicant: NXP B.V.
**5656 AG Eindhoven (NL)**

(72) Inventors:
• **Pandharipande, Ashish**
**5656AG Eindhoven (NL)**
• **Filippi, Alessio**
**5656AG Eindhoven (NL)**
• **Nikov, Ventzislav**
**5656AG Eindhoven (NL)**

(74) Representative: **Miles, John Richard**
**NXP Semiconductors**
**Intellectual Property Group**
**The Cattle Barn, Upper Ashfield Farm**
**Hoe Lane**
**Romsey, Hampshire SO51 9NJ (GB)**

(54) **SPOOFING SIGNAL DETECTION AND MITIGATION**

(57)    To detect a spoofing signal transmitted by an attacker, a spoofing detection circuit forms a ranging circuit group by first selecting two or more ranging circuits each disposed at different locations. The spoofing detection circuit then requests and receives a set of measurements over a period of time from each ranging circuit in the ranging circuit group. Based on the received sets of measurements, the spoofing detection circuit estimates one or more locations for a target, a path of the target, or both. The spoofing detection circuit then determines whether the estimated locations or path of the target indicate spatial consistency or temporal consistency. Based on the estimated locations, estimated path, or both not indicating a spatial consistency, temporal consistency, or both, the spoofing detection circuit determines that a spoofing signal was received by the ranging circuit group.

FIG. 1

(52) Cooperative Patent Classification (CPC): (Cont.)
G01S 2013/468; G01S 2013/9316;
G01S 2013/9323

**Description**

BACKGROUND

To improve safety, some vehicles help avoid collisions and maintain driver attention by implementing certain functions such as obstacle detection, blind spot detection, automatic breaking, and the like. These vehicles implement such functions by using a radar system on the vehicle that includes transmitters configured to transmit a radar waveform in multiple directions towards one or more obstructions. As the transmitted waveform reflects off an obstruction, a receiver of the radar system measures parameters of the reflections and based on these measured parameters, determines a distance between the vehicle and the obstruction. From this determined distance between the vehicle and the target, the vehicle implements one or more of the functions by alerting the driver to the obstruction, automatically breaking the vehicle before the vehicle collides with the obstruction, maintaining a distance between the vehicle and the obstruction, or any combination thereof.

BRIEF DESCRIPTION OF THE DRAWINGS

The present disclosure may be better understood, and its numerous features and advantages are made apparent to those skilled in the art by referencing the accompanying drawings. The use of the same reference symbols in different drawings indicates similar or identical items.

FIG. 1 is a block diagram of a spoofing detection system configured to detect one or more transmitted spoofing signals, in accordance with some embodiments.

FIG. 2 is a diagram illustrating the measurements of reflections by ranging circuits when receiving a spoofing signal, in accordance with some embodiments.

FIG. 3 is a block diagram of an example operation for spoofing signal detection, in accordance with some embodiments.

FIGs. 4 to 6 are block diagrams each illustrating a corresponding example configuration for a spoofing detection system, in accordance with some embodiments.

FIG. 7 is a flow diagram of an example method for spoofing signal detection, in accordance with some embodiments.

DETAILED DESCRIPTION

Some vehicles, such as cars, trucks, motorcycles, sports utility vehicles, autonomous vehicles, drones, robotic platforms, unmanned ariel vehicles (UAVs), and the like, implement one or more ranging circuits that configured to detect the position of one or more target vehicles. For example, a vehicle includes one or more ranging circuits configured to detect the position of a target vehicle driving on the same road as the vehicle. To detect the position of a target vehicle, each ranging circuit is configured to transmit a waveform, such as a series of chirps (e.g., radar chirps or light detection and ranging (LiDAR) chirps), according to one or more parameters that include, for example, one or more start times, frequencies, directions, periods, and the like. As the transmitted waveform reflects off the target vehicle, the ranging circuit measures the parameters of the reflections and determines one or more range measurements based on the transmitted waveform, the measured parameters of the reflections, or both. These range measurements, for example, indicate the distance of the target vehicle from the ranging circuit, the angle of the target vehicle relative to the ranging circuit, the velocity of the target vehicle, or any combination thereof. After determining such range measurements, the processing system of the vehicle uses the determined range measurements to implement one or more functions of the vehicle such as cruise control, blind spot detection, traffic alerts, collision detection, emergency steering, throttle management, or the like.

However, some platforms include systems configured to transmit a spoofing signal that prevents a ranging circuit from determining the location of a target vehicle. These platforms include, for example, one or more mobile systems (e.g., such as those in a vehicles) stationary systems, or both. As used herein, such platforms transmitting a spoofing signal are referred to herein as "attackers." As an example, some attackers include a spoofing circuit that listens for waveforms transmitted by the ranging circuit of a vehicle. Based on the received waveforms, the spoofing circuit determines the parameters of the waveform transmitted by the ranging circuit and generates a spoofing signal based on the determined parameters of the waveform. For example, the spoofing circuit changes one or more determined parameters of the waveform, such as the phase, period, time, or the like, to generate the spoofing signal. The spoofing circuit then transmits the spoofing signal toward the ranging circuit of the vehicle. Because the spoofing circuit of the attacker transmits the spoofing signal toward the ranging circuit of the vehicle, the ranging circuit receives both reflections of the transmitted waveform and the spoofing signal which causes the ranging circuit to measure the parameters of a waveform formed from a combination of the reflections and the spoofing signal (e.g., spoofed waveform) rather than just the received reflections. Based on the measured parameters of this spoofed waveform, the ranging circuit determines a range measurement indicating a spoofed location for the attacker, preventing the processing system of the vehicle from determining the actual location of the attacker and preventing the processing system of the vehicle from accurately implementing one or more functions of the vehicle.

As such, systems and techniques disclosed herein are directed toward the detection and mitigation of received spoofing signals. For example, a spoofing detection system includes a spoofing detection circuit communicatively coupled to a ranging circuit group by a wired or wireless connection. As an example, the spoofing detection system includes a spoofing detection circuit implemented in a vehicle that is communicatively coupled to a ranging circuit group. As another example, the spoofing detection system includes a spoofing detection circuity implemented by one or more servers communicatively coupled to a ranging circuit group by a wireless network (e.g., wide area network, cellular network). The ranging circuit group, for example, includes two or more ranging circuits each disposed at different locations. For example, the ranging circuit group includes two or more randomly or pseudo-randomly selected ranging circuits disposed at different locations on the same vehicles, disposed on different vehicles, or both. To detect that a ranging circuit of a vehicle has received a spoofing signal, the spoofing detection circuit requests determined range measurements from each ranging circuit in the ranging circuit group over a period of time. For example, based on one or more trigger events occurring such as the processing system of a vehicle launching a certain application, the processing system of a vehicle performing a certain function of the vehicle, a predetermined amount of time elapsing, a vehicle being at a certain location, or any combination thereof, the spoofing detection circuit provides a request for measurements to each ranging circuit in the ranging circuit group. This request for measurements, for example, includes data requesting the range measurements determined during a certain period of time.

Based on receiving a request for measurements from the spoofing detection circuit, each ranging circuit in the ranging circuit group provides data representing determined range measurements over the period of time indicated in the request for measurements to the spoofing detection circuit. As an example, based on receiving a request for measurements, each ranging circuit in the ranging circuit group begins measuring parameters of received reflections over the period of time indicated in the request for measurements. From the measured parameters, each ranging circuit determines corresponding range measurements and provides data representing these range measurements to the spoofing circuit via a wired or wireless connection. After receiving a respective set of range measurements from each ranging circuit in the group, the spoofing circuit selects a predetermined number of measurements from each set of range measurements. As an example, the spoofing circuit first selects a number of times within the period of time indicated by the requests for measurements. The spoofing circuit then selects range measurements from each set of range measurements that correspond to the selected times.

Using the selected range measurements, the spoofing circuit is configured to estimate the location of a target vehicle at the selected times. That is, the spoofing circuit determines two or more estimated locations of the target vehicle each corresponding to a selected time. To this end, for each selected time for which range measurements were selected, the spoofing circuit determines a location of the target vehicle based on the selected range measurements from each ranging circuit corresponding to that time. For example, for each selected time and using one or more equations, the spoofing circuit triangulates a location of the target vehicle based on the selected range measurements from three ranging circuits at the corresponding time. After determining two or more estimated locations of the target vehicle each at different times, the spoofing circuit estimates a path of the target vehicle. For example, based on determining four estimated locations of a target vehicle each at different times, the spoofing circuit estimates a first leg of a path between a first estimated location (e.g., temporally first location) and a second estimated location (e.g., temporally second location), a second leg of the path between the second estimated location and a third estimated location (e.g., temporally third location), and a third leg of the path between the third estimated location and a fourth estimated location (e.g., temporally fourth location). Each of these legs of the path, for example, represents the speed at which the target vehicle was moving, the direction in which the target vehicle was moving, or both.

Based on the estimated locations of the target vehicle each at different times, the estimated path of the target vehicle, or both, the spoofing detection circuit then checks the spatial consistency, temporal consistency, or both of the estimated locations, estimated path, or both. That is, the spoofing detection circuit determines whether the estimated locations of the target vehicle, the estimated path of the target vehicle, or both are spatially consistent, temporally consistent, or both with the movement or location of a traveling vehicle. As an example, the spoofing detection circuit compares the estimated path of the target vehicle to one or more predetermined paths to determine whether the estimated path shows spatial consistency or temporal consistency with a traveling vehicle. Based on the estimated path deviating from one or more predetermined paths by a predetermined degree, the spoofing circuit determines that the estimated path does not show spatial consistency, temporal consistency, or both with a traveling vehicle. As another example, the spoofing detection circuit compares the estimated locations of the target vehicle to one or more predetermined locations to

**EP 4 711 801 A1**

determine if the estimated locations show spatial consistency or temporal consistency with a traveling vehicle. Based on one or more estimated locations matching one or more certain predetermined locations such as off-road locations (e.g., locations adjacent to, above, or below a road), medians, areas between lanes of a road, or any combination thereof, the spoofing detection circuit determines that the estimated location does not show spatial consistency, temporal consistency, or both with a traveling vehicle.

In response to determining that an estimated path, estimated location, or both of a target vehicle does not show spatial consistency, temporal consistency, or both with a traveling vehicle, the spoofing detection circuit determines that a spoofing signal has been received by one or more ranging circuits in the ranging circuit group. Based on determining that a spoofing signal has been received by one or more ranging circuits in the ranging circuit group, the spoofing detection system is configured to take one or more spoofing mitigation actions such as providing an alert to one or more vehicles including a ranging circuit determined to have received the spoofing signal, providing an alert to one or more authorities, instructing the processing systems of one or more vehicles to disable one or more functions, instructing the processing systems of one or more vehicles to end on or more applications, or any combination thereof. As an example, based on determining that a spoofing signal has been received by one or more ranging circuits in the ranging circuit group the spoofing detection system turns off the cruise control, blind spot detection, traffic alerts, collision detection, emergency steering, throttle management, or any combination thereof of a vehicle that includes a ranging circuit in the ranging circuit group. In this way, the spoofing detection system is configured to detect and mitigate spoofing signals sent out by one or more attackers which helps prevent such spoofing signals from interfering with certain functions of a vehicle and helps improve vehicle safety.

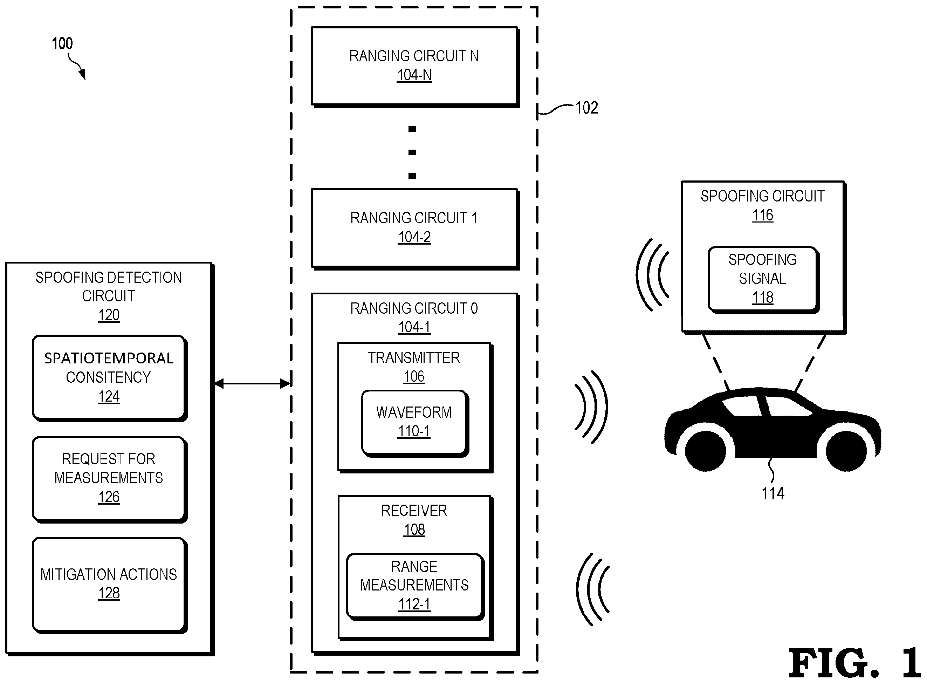

Referring now to FIG. 1, a spoofing detection system 100 to detect one or more transmitted spoofing signals is presented, in accordance with some embodiments. In embodiments, spoofing detection system 100 includes a ranging circuit group 102 that includes ranging circuits 104 each configured to transmit a waveform 110 (e.g., radar waveform, LiDAR waveform) towards a target vehicle 114 and measure received reflections of the transmitted waveform 110. Such a target vehicle 114, for example, includes a car, truck, motorcycle, sports utility vehicle, autonomous vehicle, drone, robotic platform, UAV, or the like. In embodiments, each ranging circuit 104 of ranging circuit group 102 is disposed at a location different from each other ranging circuit 104 of ranging circuit group 102. As an example, in embodiments, ranging circuit group 102 includes two or more ranging circuits 104 disposed at different locations of the same vehicle, disposed on different vehicles, or both. Such vehicles, for example, include one or more cars, trucks, motorcycles, sports utility vehicles, autonomous vehicles, drones, robotic platforms, UAVs, and the like. Further, according to some embodiments, spoofing detection circuit 120 is configured to randomly select, pseudo-randomly select, or both two or more ranging circuits 104 to form ranging circuit group 102. That is, spoofing detection circuit 120 randomly selects, pseudo-randomly selects, or both two or more ranging circuits 104 each disposed at different locations on the same vehicle, different vehicles, or both to form ranging circuit group 102. Though the example embodiment presented in FIG. 1 shows a ranging circuit group 102 as including three ranging circuits (104-1, 104-2, 104-N) represent an N integer number of ranging circuits (where N>1), in other embodiments, the ranging circuit group 102 can include any non-zero integer number of ranging circuits 104.

These ranging circuits 104 each include, for example, one or more processors, microprocessors, microcontrollers, programmable logic devices, memories, storages, transmitters 106, receivers 108, antenna elements, or any combination thereof. In embodiments, each ranging circuit 104 includes a corresponding transmitter 106 that includes one or more antenna elements (e.g., radar antenna elements, LiDAR antenna elements) that transmit a corresponding waveform 110 such as a continuous-wave frequency modulated (CWFM) waveform, linear frequency-modulated waveform (LFMW), LiDAR waveform, or the like. As an example, a transmitter 106 is configured to transmit a CWFM waveform that includes one or more frames to be transmitted. Each of these frames includes one or more chirps to be transmitted and a processing time wherein no chirps are transmitted. As another example, a transmitter 106 is configured to transmit a LiDAR waveform that includes one or more wavelengths of light. Further, the waveform 110 transmitted by a transmitter 106 is defined by one or more parameters such as chirp durations, start time, bandwidths, number of chirps, and the like. According to some embodiments, each ranging circuit 104 is configured to transmit the waveform 110 with a parameter that differs from the waveform 110 transmitted by one or more other ranging circuits 104. As an example, each ranging circuit 104 in ranging circuit group 102 is configured to transmit waveform 110 with a corresponding start time (e.g., chirp start time) different from the waveform 110 transmitted by each other ranging circuit 104 in the ranging circuit group 102.

After the transmitter 106 of a ranging circuit 104 has transmitted a waveform 110, the receiver 108 of the same ranging circuit 104 is configured to measure parameters of reflections of the transmitted waveform 110 received by one or more antenna elements (e.g., radar antenna elements, LiDAR antenna elements) of the receiver 108. As an example, a receiver 108 is configured to measure the parameters of the reflections of the transmitted waveform 110 off the target vehicle 114. Such parameters of the reflections of the transmitted waveform 110, for example, represent the amplitude, angle, or both of received reflections at corresponding times. As another example, a receiver 108 is configured to measure the reflections of a transmitted LiDAR waveform as a discrete return or a waveform return. According to some embodiments, a ranging circuit 104 is configured to determine a location of a target vehicle 114 relative to the ranging

5

circuit 104 based on the measured parameters of received reflections. That is, a ranging circuit 104 is configured to, based on the measured parameters of received reflections, determine a range measurement 112 that represents the distance between the ranging circuit 104 and the target vehicle 114, an angle of the target vehicle 114 relative to the ranging circuit 104, a velocity of the target vehicle 114, or any combination thereof. For example, a ranging circuit 104 is configured to perform one or more operations (e.g., Fourier transforms, addition, subtraction) using the transmitted waveform and measured parameters of received reflections to determine a ranging data cube that represents a position of the target vehicle 114 within a three-dimensional space. Such a ranging data cube indicates the range of a target vehicle 114 from a ranging circuit 104, a doppler shift of a target vehicle 114 relative to the ranging circuit 104, an angle of the target vehicle 114 relative to the ranging circuit 104, or the like. Using the ranging data cube, the ranging circuit 104 then determines a range measurement 112 representing the distance between the ranging circuit 104 and the target vehicle 114. After determining the range measurement 112, a processing system of a vehicle uses the range measurement 112 for certain functions such as cruise control, blind spot detection, traffic alerts, collision detection, emergency steering, throttle management, and the like.

However, in embodiments, one or more mobile platforms, stationary platforms, or both (e.g., attackers)include a spoofing circuit 116 that includes one or more processors, microprocessors, microcontrollers, memories, storages, transmitters, receivers, or any combination thereof configured to produce a spoofing signal 118. Within the example embodiment presented in FIG. 1, an attacker configured to generate a spoofing signal 118 is implemented within a target vehicle 114. According to embodiments, to generate a spoofing signal 118, the spoofing circuit 116 of an attacker is configured to measure parameters of a received waveform 110 transmitted from a ranging circuit 104 such as the angle and amplitude of the received waveform 110 at corresponding times. Based on these measurements, the spoofing circuit 116 then estimates the parameters (e.g., amplitude, frequency, period, phase) of the transmitted waveform 110 and generates a spoofing signal 118 by modifying the estimated waveform 110. For example, after determining one or more parameters of a transmitted waveform 110, the spoofing circuit 116 modifies the phase of the transmitted waveform 110 by introducing a phase shift to generate a spoofing signal 118. As another example, the spoofing circuit 116 modifies the frequency of the transmitted waveform 110 to generate a spoofing signal 118. The spoofing circuit 116 then transmits the spoofing signal 118 such that the ranging circuit 104 that transmitted the waveform 110 receives the spoofing signal 118. Due to the spoofing circuit 116 transmitting the spoofing signal 118, the receiver 108 of the ranging circuit 104 receives both reflections of the waveform 110 and the spoofing signal 118, causing the ranging circuit 104 to measure a combination of the reflections of the waveform 110 and the spoofing signal 118 rather than just reflections of the waveform 110. The ranging circuit 104 then determines range measurements 112 using the measurements of the combination of the reflections of the waveform 110 and the spoofing signal 118, preventing the ranging circuit 104 from determining the actual location of the target vehicle 114 (e.g., from determining an actual range measurement 112). For example, due to the spoofing signal 118, the ranging circuit 104 determines a ghost location at a different point from the target vehicle 114 rather than the actual location of the target vehicle 114. Because the ranging circuit 104 determines this ghost location rather than the actual location of the target vehicle 114, the processing system of a vehicle is not able to accurately determine a range measurement 112 or implement certain functions (e.g., cruise control, blind spot detection, traffic alerts, collision detection, emergency steering, throttle management) which compromises the safety of the vehicle.

To help detect these spoofing signals 118, spoofing detection system 100 includes spoofing detection circuit 120 having one or more processors, microprocessors, microcontrollers, programmable logic devices, memories, storages, or any combination thereof configured to detect a spoofing signal 118 based on the range measurements 112 measured by each ranging circuit 104 within the ranging circuit group 102. For example, in embodiments, spoofing detection circuit 120 is communicatively coupled to each ranging circuit 104 in ranging circuit group 102 using one or more wired communication protocols (e.g., Ethernet, universal serial bus (USB), peripheral component interconnect (PCI), serial peripheral interface (SPI), inter-integrated circuit (I2C), universal asynchronous receiver/transmitter (UART)), wireless communication protocols (e.g., cellular protocols, Wi-Fi, Bluetooth, vehicle-to-everything (V2X)), or both. As an example, in some embodiments, spoofing detection circuit 120 is implemented by one or more servers communicatively coupled to each ranging circuit 104 in the ranging circuit group 102 by one or more wireless communication protocols. As another example, spoofing detection circuit 120 is implemented in a vehicle that includes one or more ranging circuits 104 in the ranging circuit group 102. Based on spoofing detection circuit 120 being implemented in such a vehicle, spoofing detection circuit 120 is communicatively coupled to the ranging circuits 104 of the vehicle by one or more wired communication protocols, wireless communication protocols, or both and to each other ranging circuit 104 of the ranging circuit group 102 by one or more wireless communication protocols.

To detect that a spoofing signal 118 was received by one or more ranging circuits 104 in the ranging circuit group 102, spoofing detection circuit 120 first transmits a request for measurements 126 to each ranging circuit 104 in the ranging circuit group 102 that includes data indicating a period of time over which range measurements 112 are requested. This period of time indicated by a request for measurements 126 identifies, for example, a certain starting time, a certain end time, an amount of time (e.g., an amount of time defined by microseconds, milliseconds, seconds, minutes, or any fraction thereof), or any combination thereof. According to some embodiments, spoofing detection circuit 120 is configured to transmit a request for measurements 126 to each ranging circuit 104 based on one or more trigger events occurring. Such trigger events, for example, include the processing systems of one or more vehicles launching a certain application, the processing systems of one or more vehicles performing a certain function, a predetermined amount of time elapsing, one or more vehicles being at certain locations, or any combination thereof. In some embodiments, the period of time indicated by a request for measurements 126 is based on the trigger event that occurred. For example, based on the processing systems of one or more vehicles performing a certain function, spoofing detection circuit 120 transmits a request for measurements 126 that indicates a period of time corresponding to that function. As another example, based on the processing systems of one or more vehicles launching a certain application, spoofing detection circuit 120 transmits a request for measurements 126 that indicates a period of time corresponding to that application.

Based on receiving a request for measurements 126, a ranging circuit 104 is configured to transmit range measurements 112 determined during the period of time indicated in the request for measurements 126. For example, in response to receiving a request for measurements 126, a ranging circuit 104 begins transmitting a waveform 110 and measuring parameters of reflections of the transmitted waveform 110 during the period of time indicated by the request for measurements 126. From these measured parameters of the reflections, the ranging circuit 104 determines range measurements 112 each representing distances of the target vehicle 114 from the ranging circuit 104 at corresponding times within the period of time indicated by the request for measurements 126. For example, based on the transmitted waveform 110 and measured parameters of the reflections at corresponding times, the ranging circuit 104 determines a ranging data cube each indicating the distance between the ranging circuit 104 and the target vehicle (e.g., range measurement 112) at a respective time. After determining these range measurements 112, the ranging circuit 104 then transmits a set of range measurements 112 to spoofing detection circuit 120 each representing a distance between the ranging circuit 104 and the target vehicle 114 at a corresponding time within the period of time indicated by the request for measurements 126.

After receiving a set of range measurements 112 from each ranging circuit 104 in the ranging circuit group 102, spoofing detection circuit 120 selects one or more times within the period of time indicated by the request for measurements 126. As an example, spoofing detection circuit 120 selects a predetermined number of times within the period of time indicated by the request for measurements 126 randomly, pseudo-randomly, or both. From each set of range measurements 112 received from the ranging circuits 104 of the ranging circuit group 102, spoofing detection circuit 120 selects the range measurements 112 each corresponding to the selected times. Based on the selected range measurements 112 from the received sets of range measurements 112, spoofing detection circuit 120 determines an estimated location for the target vehicle 114 for each selected time. As an example, based on selecting range measurements 112 from three received sets of range measurements 112 (e.g., sets of range measurements 112 received from three ranging circuits 104), spoofing detection circuit 120 triangulates a location of the target vehicle 114 at each selected time to produce the estimated locations. As another example, based on selecting range measurements 112 from two received sets of range measurements 112 each representing the distance of the target vehicle 114 from a respective ranging circuit 104 and an angle of the target vehicle 114 relative to a respective ranging circuit 104 at corresponding times, spoofing detection circuit 120 determines a location of the target vehicle 114 at each selected time to produce the estimated locations.

After determining the estimated locations of the target vehicle 114, spoofing detection circuit 120 checks the spatiotemporal consistency 124 of the estimated locations. That is, spoofing detection circuit 120 checks whether the estimated locations are spatially consistent, temporally consistent, or both with a traveling vehicle (e.g., car, truck, motorcycle, sports utility vehicle, autonomous vehicle, drone, robotic platform, UAV, or any combination thereof). For example, in some embodiments, spoofing detection circuit 120 compares the estimated locations to one or more predetermined locations to determine whether with whether the estimated locations are spatially consistent, temporally consistent, or both with a traveling vehicle. These predetermined locations, for example, include off-road locations (e.g., locations adjacent to, above, or below a road on which a vehicle including a ranging circuit 104 is traveling), medians, areas between lanes of a road, or any combination thereof. Based on one or more of the estimated locations matching one or more of these predetermined locations, spoofing detection circuit 120 determines, for example, that the estimated locations are spatially inconsistent, temporally inconsistent, or both with a traveling vehicle.

As another example, to check the spatiotemporal consistency 124 of the estimated locations, spoofing detection circuit 120 determines a path taken by the target vehicle 114 during the period of time indicated by the requests for measurements 126 based on the estimated locations of the target vehicle 114. To determine such a path, spoofing detection circuit 120 determines respective legs of the path based on corresponding pairs of the estimated locations. For example, based on a first estimated location representing a temporally first location (e.g., temporally first in the period of time indicated by the requests for measurements 126) and a second estimated location representing a temporally second location, spoofing detection circuit 120 determines a first leg indicating an estimated direction, velocity, or both of the target vehicle 114. Further, based on the second estimated location and a third estimated location representing the temporally third location, spoofing detection circuit 120 determines a second leg indicating an estimated direction, velocity, or both of the target vehicle 114. Spoofing detection circuit 120 then continues in this way until a path between an estimated location and a final estimated location representing the temporally last location is determined. After determining two or more legs of the path, spoofing detection circuit 120 combines the determined legs to determine an estimated path of the target vehicle. Spoofing detection circuit 120 then compares the estimated path to one or more predetermined paths to check whether the estimated path is spatially consistent, temporally consistent, or both with a traveling vehicle. Based on the estimated path deviating from one or more of the predetermined paths by a predetermined degree (e.g., a threshold degree), spoofing detection circuit 120 determines that the estimated path and estimated locations are spatially inconsistent, temporally inconsistent, or both with a traveling vehicle.

**In** response to determining the estimated locations, estimated path, or both are spatially inconsistent, temporally inconsistent, or both with a traveling vehicle, spoofing detection circuit 120 determines that one or more ranging circuits 104 of the ranging circuit group 102 has received a spoofing signal 118. Based on determining that one or more ranging circuits 104 have received a spoofing signal 118, spoofing detection circuit 120 performs one or more mitigation actions 128. These mitigation actions 128, for example, include spoofing detection circuit 120 providing an alert to one or more vehicles including a ranging circuit 104 determined to have received the spoofing signal 118, providing an alert to one or more authorities, instructing the processing systems of one or more vehicles to disable one or more functions, instructing the processing systems of one or more vehicles to end on or more applications, or any combination thereof. As an example, based on determining that one or more ranging circuits 104 has received a spoofing signal 118, spoofing detection circuit 120 transmits one or more signals to the vehicles including the ranging circuits 104 that each include data instructing the processing system of a vehicle to disable cruise control, blind spot detection, traffic alerts, collision detection, emergency steering, throttle management, or any combination thereof. As another example, based on determining that one or more ranging circuits 104 have received a spoofing signal 118, spoofing detection circuit 120 transmits one or more signals to one or more authorities (e.g., police, highway authorities) indicating a spoofing signal 118 has been detected at a certain location. As such, by including spoofing detection circuit 120 in this way, spoofing detection system 100 is enabled to detect and mitigate spoofing signals 118 sent out by one or more attackers, helping to prevent such spoofing signals 118 from interfering with certain functionalities of a vehicle and helping to improve vehicle safety.

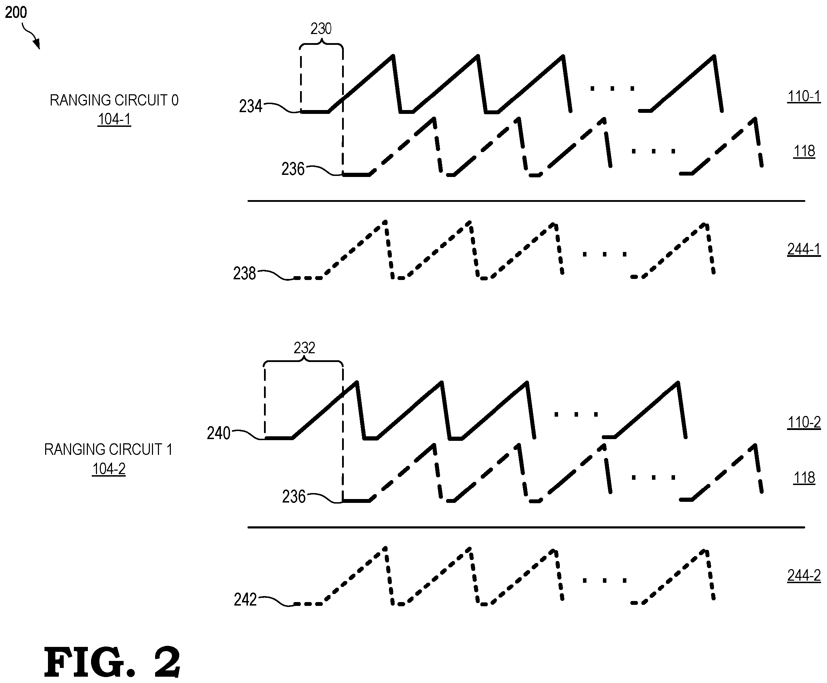

Referring now to FIG. 2, an example diagram 200 showing the measurements of reflections by ranging circuits when receiving spoofing signal is presented, in accordance with embodiments. According to some embodiments, example diagram 200 represents the measurements of reflections by a first ranging circuit 104-1 (e.g., ranging circuit 0) and a second ranging circuit 104-2 (e.g., ranging circuit 104-2) when receiving a spoofing signal 118. For example, a first ranging circuit 104-1 is configured to transmit a first waveform 110-1 that includes, for example, a number of chirps. In embodiments, the first ranging circuit 104-1 is configured to transmit the first waveform 110-1 such that the first waveform 110-1 has a first start time 234 (e.g., chirp start time). Further, the first ranging circuit 104-1 is configured to receive a spoofing signal 118 that shares one or more parameters (e.g., period, amplitude, frequency) with the first waveform 110-1 but has a second start time 236 that is different from the first start time 234 of the first waveform 110-1. That is, the spoofing signal 118 includes a second start time 236 that is different from the first start time 234 of the first waveform 110-1 such that there is a phase shift 230 between the first waveform 110-1 and the spoofing signal 118. Due to this phase shift 230, the receiver 108 of the first ranging circuit 104-1 measures a first spoofed waveform 244-1 formed from a combination of the first waveform 110-1 and the spoofing signal 118 rather than just reflections of the first waveform 110-1. As an example, the receiver 108 measures a first spoofed waveform 244-1 that has a start time 238 different from the start times 234, 236 of both the first waveform 110-1 and the spoofing signal 118. In embodiments, the first ranging circuit 104-1 determines range measurements 112 based on this first spoofed waveform 244-1 which results in the first ranging circuit 104-1 determining range measurements 112 that indicate a ghost location rather than the actual location of a target vehicle 114.

Additionally, the second ranging circuit 104-2 is configured to transmit a second waveform 110-2 such that the second waveform 110-2 shares one or more parameters with the first waveform 110-1 but has a third start time 240 different from the first start time 234. Like the first ranging circuit 104-1, the second ranging circuit 104-2 receives the spoofing signal 118 that has a second start time 236 different from the third start time 240 of the second waveform 110-2. Due to the spoofing signal 118 having a second start time 236 that differs from the third start time 240 of the second waveform 110-2, a phase shift 232 occurs between the second waveform 110 and the spoofing signal 118. Based on this phase shift 232, the receiver 108 of the second ranging circuit 104-2 measures a second spoofed waveform 244-2 formed from a combination of the second waveform 110-2 and the spoofing signal 118 rather than just reflections of the second waveform 110-2. As an example, the receiver 108 measures a second spoofed waveform 244-2 that has a start time 242 different from the start times 240, 236 of both the second waveform 110-2 and the spoofing signal 118. The second ranging circuit 104-2 then determines range measurements 112 based on this second spoofed waveform 244-2 which results in the second ranging circuit 104 also determining range measurements 112 that indicate a ghost location rather than the actual location of a target vehicle 114.

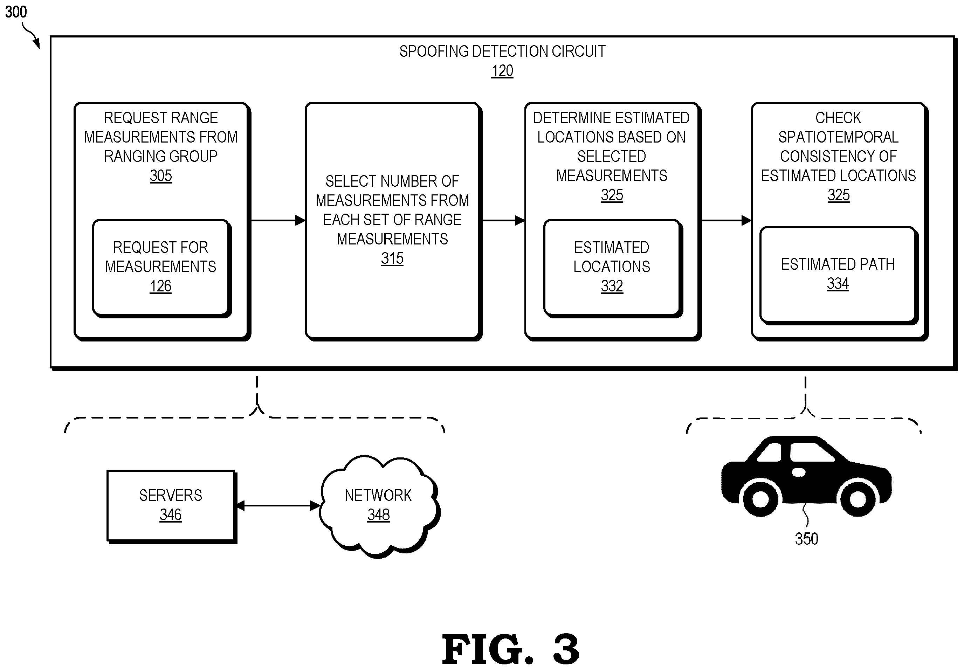

Referring now to FIG. 3, an example operation 300 for spoofing signal detection is presented, in accordance with some embodiments. In embodiments, at least a portion of example operation 300 is implemented by spoofing detection circuit 120. In some embodiments, spoofing detection circuit 120 is configured to perform example operation 300 when implemented by one or more servers 346 communicatively coupled to each ranging circuit 104 in a ranging circuit group 102 by a network 348. Such a network 348, for example, includes a cellular network, wide area network, local area network, or the like. Further, in other embodiments, spoofing detection circuit 120 is configured to perform example operation 300 when implemented by a vehicle 350 communicatively coupled to each ranging circuit 104 in a ranging circuit group 102 by one or more wired communication protocols (e.g., ethernet, USB, PCI, SPI, I2C, UART), wireless communication protocols (e.g., cellular protocols, Wi-Fi, Bluetooth, V2X), or both. A vehicle 350, for example, includes a car, truck, motorcycle, sports utility vehicle, autonomous vehicle, drone, robotic platform, UAV, or the like.

In embodiments, example operation 300 first includes, at block 305, spoofing detection circuit 120 requesting range measurements 112 from each ranging circuit 104 in a ranging circuit group 102. As an example, at block 305, spoofing detection circuit 120 first transmits, to each ranging circuit 104, a request for measurements 126 indicating a period of time identifying a certain starting time, certain end time, an amount of time (e.g., an amount of time defined by microseconds, milliseconds, seconds, minutes, or any fraction thereof), or any combination thereof. In response to receiving a request for measurements 126 from spoofing detection circuit 120, each ranging circuit 104 begins transmitting a respective waveform 110 and measuring parameters of the reflections of the transmitted waveform 110. As an example, each ranging circuit 104 transmits a waveform 110 sharing one or more parameters with the waveform 110 transmitted by each other ranging circuit 104 in the ranging circuit group 102 but having a corresponding start time different from each other ranging circuit 104 in the ranging circuit group 102. Based on the respective waveform 110 transmitted by the ranging circuit 104 and the respective parameters of the received reflections measured by the ranging circuit 104, each ranging circuit 104 determines a set of range measurements 112 that indicate the distance of the target vehicle 114 from the ranging circuit 104, the angle of the target vehicle 114 relative to the ranging circuit, the velocity of the target vehicle 114, or any combination thereof during the period of time indicated in the request for measurements 126. After determining a set of range measurements 112, a ranging circuit 104 transmits the range measurements 112 to spoofing detection circuit 120.

After receiving a respective set of range measurements 112 from each ranging circuit 104, at block 315, spoofing detection circuit 120 is configured to select a predetermined number of measurements from each set of range measurements 112. For example, spoofing detection circuit 120 first selects a predetermined number of times within the period of time indicated in the request for measurements 126 randomly, pseudo-randomly, or both. As an example, spoofing detection circuit 120 randomly or pseudo-randomly selects four times within the period of time indicated in the request for measurements 126. After selecting the times within the period of time indicated in the request for measurements 126, spoofing detection circuit 120 selects the range measurements 112 from each received set of range measurements 112 corresponding to the selected time. That is, spoofing detection circuit 120 selects the range measurements 112 from each received set of range measurements 112 that indicate the distance, angle, velocity, or any combination thereof of a target vehicle 114 at the selected times.

Based on the selected range measurements 112, at block 325, spoofing detection circuit 120 is configured to determine estimated locations 332 for a target vehicle 114 at the selected times. In embodiments, for example, spoofing detection circuit 120 performs one or more operations using the selected range measurements 112 to determine the estimated locations 332 for the target vehicle 114 at the selected times. As an example, based on selecting range measurements 112 from sets of range measurements 112 received from three ranging circuits 104, spoofing detection circuit 120 triangulates estimated locations 332 of the target vehicle 114 using the selected range measurements 112. For example, for each selected time, spoofing detection circuit 120 triangulates estimated locations 332 using the following equation:

$$[EQ01] \begin{bmatrix} x_a \\ y_a \end{bmatrix} = \frac{1}{2} \begin{bmatrix} (x_2 - x_1) & (y_2 - y_1) \\ (x_3 - x_1) & (y_3 - y_1) \end{bmatrix}^{-1} \begin{bmatrix} (d_1^2 - d_2^2) + (x_2^2 - x_1^2) + (y_2^2 - y_1^2) \\ (d_1^2 - d_3^2) + (x_3^2 - x_1^2) + (y_3^2 - y_1^2) \end{bmatrix}$$

wherein, at the selected time, $x_a$ represents the location of a target vehicle 114 along a first axis (e.g., x-axis), $y_a$ represents the location of the target vehicle 114 along a second axis (e.g., y-axis), $x_1$ represents the location of a first ranging circuit 104 along the first axis, $y_1$ represents the location of the first ranging circuit 104 along the second axis, $d_1$ represents a distance between the first ranging circuit 104 and the target vehicle 114, $x_2$ represents the location of a second ranging circuit 104 along the first axis, $y_2$ represents the location of the second ranging circuit 104 along the second axis, $d_2$ represents a distance between the second ranging circuit 104 and the target vehicle 114, $x_3$ represents the location of a third ranging circuit 104 along the first axis, $y_3$ represents the location of the third ranging circuit 104 along the second axis, and $d_3$ represents a distance between the third ranging circuit 104 and the target vehicle 114. As another example, based on selected range measurements 112 from two sets of range measurements 112 each representing the distance and angle of the target vehicle 114 relative to a corresponding ranging circuit 104, spoofing detection circuit 120 determines estimated locations 332 of the target vehicle 114.

After determining the estimated locations 332 of the target vehicle 114 at the selected times, at block 325, spoofing detection circuit 120 checks the spatiotemporal consistency 124 of the estimated locations 332. That is, spoofing detection circuit 120 determines whether the estimated locations 332 are spatially consistent, temporally consistent, or both with a traveling vehicle. As an example, at block 325, spoofing detection circuit 120 compares the estimated locations 332 each to one or more predetermined locations that represent, for example, off-road locations (e.g., locations adjacent to, above, or below a road), medians, areas between lanes of a road, or any combination thereof. Based on one or more estimated locations 332 matching one or more predetermined locations, spoofing detection circuit 120 determines that there is no spatially consistency, temporal consistency, or both in the estimated locations 332 (e.g., the estimated locations 332 are not spatially consistent, temporally consistent, or both with a traveling vehicle). As another example, based on the estimated locations 332, spoofing detection circuit 120 estimates the path of the target vehicle 114. As an example, based on a first estimated location 332 corresponding to the temporally first selected time and a second estimated location 332 corresponding to the temporally second selected time, spoofing detection circuit 120 determines a first leg representing a first velocity (e.g., direction and speed) of the target vehicle 114. Further, based on the second estimated location 332 and a third estimated location 332 corresponding to the temporally third selected time, spoofing detection circuit 120 determines a second leg representing a second velocity of the target vehicle 114. Spoofing detection circuit 120 then continues in this way until a final leg is determined based on an estimated location 332 corresponding to the temporally penultimate selected time and a final estimated location 332 corresponding to the temporally final selected time. After determining these legs, spoofing detection circuit 120 combines the legs to determine an estimated path 334 and compares the estimated path 334 to one or more predetermined paths. Based on the estimated path 334 deviating from one or more predetermined paths by a predetermined degree, spoofing detection circuit 120 determines that there is no spatial consistent, temporal consistency, or both in the estimated path 334 (e.g., the estimated path 334 is not spatially consistent, temporally consistent, or both with a traveling vehicle).

Still referring to block 325, based on spoofing detection circuit 120 determining that the estimated locations 332, estimated path 334, or both do not show spatial consistency, temporal consistency, or both, spoofing detection circuit 120 performs one or more mitigation actions 128. As an example, based on the estimated locations 332, estimated path 334, or both not showing spatiotemporal consistency 124, spoofing detection circuit 120 transmits one or more signals to the vehicles including the ranging circuits 104 that each include data instructing the processing system of a vehicle to disable cruise control, blind spot detection, traffic alerts, collision detection, emergency steering, throttle management, or any combination thereof. As another example, based on determining that the estimated locations 332, estimated path 334, or both do not show spatiotemporal consistency 124, spoofing detection circuit 120 transmits one or more signals to one or more authorities (e.g., police, highway authorities) indicating a spoofing signal 118 has been detected at a certain location.

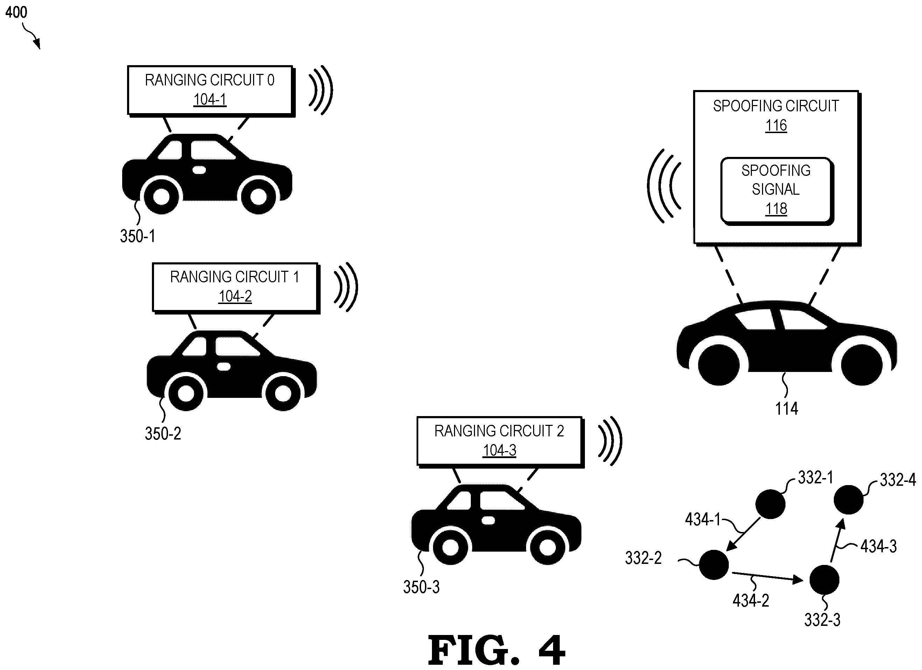

Referring now to FIGs. 4 to 6, FIGs. 4 to 6 each present a corresponding example configuration 400, 500, 600 for spoofing detection system 100, in accordance with some embodiments. For example, referring now to FIG. 4, a first example configuration 400 is presented that includes a ranging circuit group 102 wherein each ranging circuit 104 of the ranging circuit group 102 is disposed on a respective vehicle 350. For example, within the first example configuration 400, a first ranging circuit 104-1 (e.g., ranging circuit 0) is disposed on a first vehicle 350-1, a second ranging circuit 104-2 (e.g., ranging circuit 1) is disposed on a second vehicle 350-2, and a third ranging circuit 104-3 (e.g., ranging circuit 2) is disposed on a third vehicle 350-3. Additionally, based on receiving a request for measurements 126 from spoofing detection circuit 120, each ranging circuit 104-1, 104-2, 104-3, is configured to determine a set of range measurements 112 representing the distance of the target vehicle from 114 the ranging circuit 104, the angle of the target vehicle 114 relative to the ranging circuit 104, the velocity of the target vehicle 114, or any combination during the period of time indicated in the request for measurements 126. After determining such a set of range measurements 112, a ranging circuit 104 transmits the set of range measurements 112 to spoofing detection circuit 120.

From each of the received sets of range measurements 112, spoofing detection circuit 120 selects range measurements 112 corresponding to a predetermined number of times selected randomly or pseudo-randomly from the period of time indicated in the request for measurements 126. Using these selected range measurements 112, spoofing detection circuit 120 estimates estimated locations 332 for the target vehicle 114 at the selected times. As an example, referring to embodiment presented in FIG. 4, spoofing detection circuit 120 determines a first estimated location 332-1 at the temporally first selected time, a second estimated location 332-2 at the temporally second selected time, a third estimated location 332-3 at the temporally third selected time, and a fourth estimated location 332-4 at the temporally fourth selected time. Additionally, in embodiments, from these estimated locations 332, spoofing detection circuit 120 determines an estimated path 334 of the target vehicle 114. For example, between the first estimated location 332-1 and the second estimated location 332-2, spoofing detection circuit 120 determines a first leg 434-1; between the second estimated location 332-2 and the third estimated location 332-3, spoofing detection circuit 120 determines a second leg 434-2; and between the third estimated location 332-3 and the fourth estimated location 332-4, spoofing detection circuit 120 determines a third leg 434-3. Spoofing detection circuit 120 then combines these legs 434 to determine an estimated path 334. Further, in embodiments, after determining the estimated locations 332, estimated path 334, or both, spoofing detection circuit 120 checks the spatiotemporal consistency 124 of the estimated locations 332, estimated path 334, or both to determine whether a spoofing signal 118 was received by the ranging circuits 104-1, 104-2, 104-3.

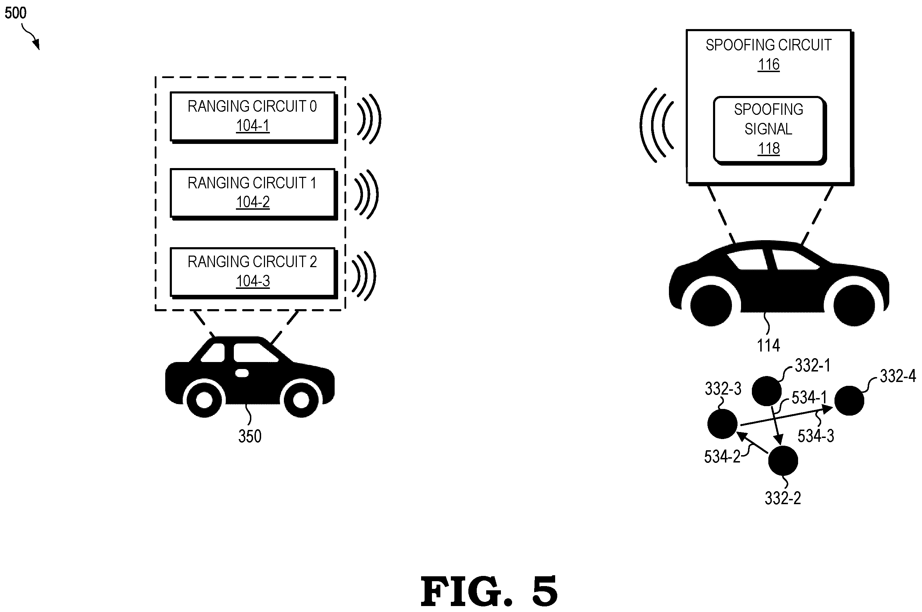

Referring now FIG. 5, a second example configuration 500 is presented that includes a ranging circuit group 102 wherein each ranging circuit 104 of the ranging circuit group 102 is disposed on the same vehicle 350. For example, within the second example configuration 500, a first ranging circuit 104-1 (e.g., ranging circuit 0) is disposed at a first location on the vehicle 350, a second ranging circuit 104-2 (e.g., ranging circuit 1) is disposed at a second location, different from the first location, on the vehicle 350, and a third ranging circuit 104-3 (e.g., ranging circuit 2) is disposed at a third location, different from the first and second locations, on the vehicle 350. Further, based on receiving a request for measurements 126 from spoofing detection circuit 120, each ranging circuit 104-1, 104-2, 104-3, is configured to determine a set of range measurements 112 representing the distance of the target vehicle from 114 the ranging circuit 104, the angle of the target vehicle 114 relative to the ranging circuit 104, the velocity of the target vehicle 114, or any combination during the period of time indicated in the request for measurements 126. After determining such a set of range measurements 112, a ranging circuit 104 transmits the set of range measurements 112 to spoofing detection circuit 120. Based on these range measurements 112, spoofing detection circuit 120 determines estimated locations 332-1, 332-2, 332-3, 332-4 of the target vehicle 114 each corresponding to a respective time selected randomly or pseudo-randomly from the period of time indicated in the request for measurements 126. Additionally, from these estimated locations 332, spoofing detection circuit 120 is configured to determine an estimated path 334 of the target vehicle 114 by determining, for example, a first leg 534-1, a second leg 534-2, and a third leg 534-3. After determining these estimated locations 332, the estimated path 324, or both, spoofing detection circuit 120 checks the spatiotemporal consistency 124 of the estimated locations 332, estimated path 334, or both to determine whether a spoofing signal 118 was received by the ranging circuits 104-1, 104-2, 104-3.

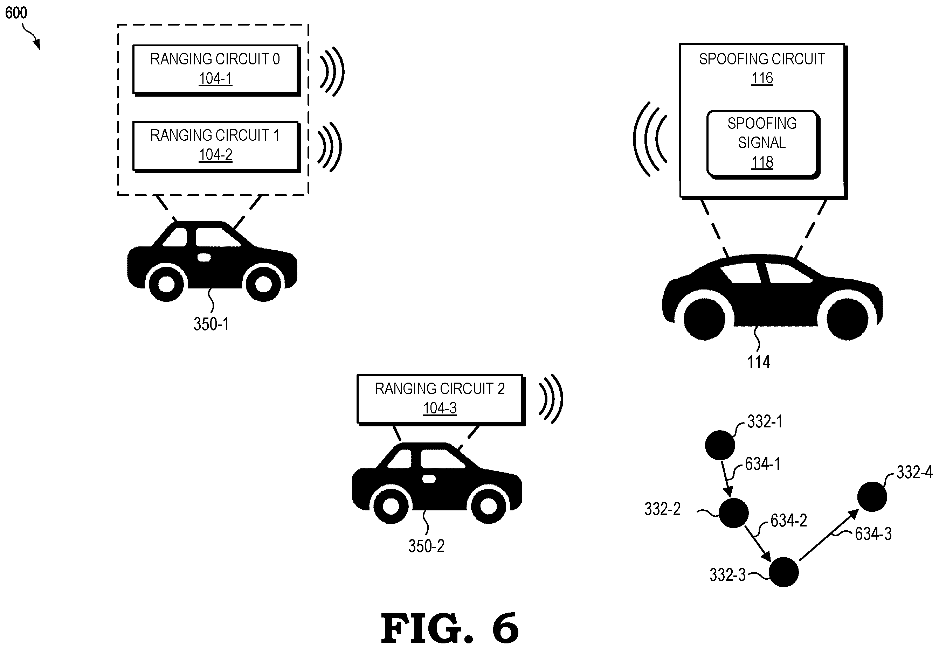

Referring now FIG. 6, a third example configuration 600 is presented that includes a ranging circuit group 102 that includes ranging circuits 104 disposed on two vehicles 350-1, 350-2. For example, within the third example configuration 600, a first ranging circuit 104-1 (e.g., ranging circuit 0) is disposed at a first location on a first vehicle 350-1, a second ranging circuit 104-2 (e.g., ranging circuit 1) is disposed at a second location, different from the first location, on the first vehicle 350-1, and a third ranging circuit 104-3 (e.g., ranging circuit 2) is disposed on a second vehicle 350-2. Further, based on receiving a request for measurements 126 from spoofing detection circuit 120, each ranging circuit 104-1, 104-2, 104-3, is configured to determine a set of range measurements 112 representing the distance of the target vehicle from 114 the ranging circuit 104, the angle of the target vehicle 114 relative to the ranging circuit 104, the velocity of the target vehicle 114, or any combination during the period of time indicated in the request for measurements 126. After determining such a set of range measurements 112, a ranging circuit 104 transmits the set of range measurements 112 to spoofing detection circuit 120. Based on these range measurements 112, spoofing detection circuit 120 determines estimated locations 332-1, 332-2, 332-3, 332-4 of the target vehicle 114 each corresponding to a respective time selected randomly or pseudo-randomly from the period of time indicated in the request for measurements 126. Additionally, from these estimated locations 332, spoofing detection circuit 120 is configured to determine an estimated path 334 of the target vehicle 114 by determining, for example, a first leg 634-1, a second leg 634-2 and a third leg 634-3. After determining these estimated locations 332, the estimated path 324, or both, spoofing detection circuit 120 checks the spatiotemporal consistency 124 of the estimated locations 332, estimated path 334, or both to determine whether a spoofing signal 118 was received by the ranging circuits 104-1, 104-2, 104-3.

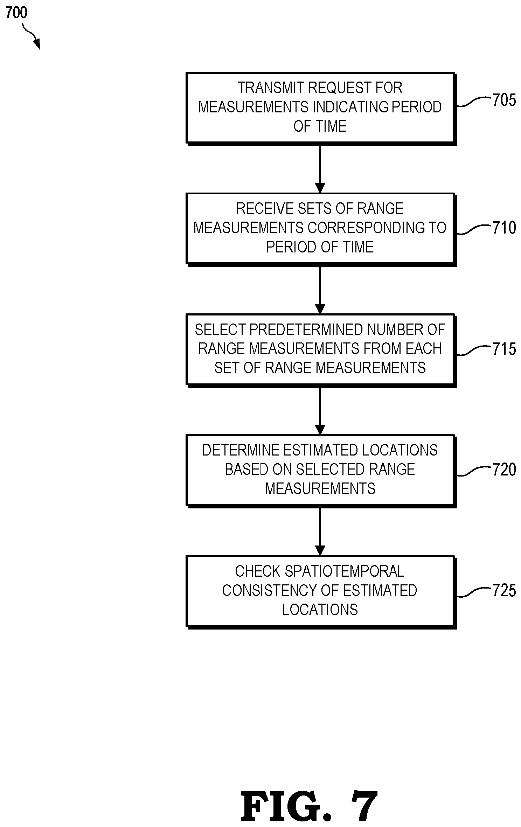

Referring now to FIG. 7, an example method 700 for spoofing signal detection is presented, in accordance with embodiments. In some embodiments, example method 700 is implemented at least in part by spoofing detection circuit 120 and one or more ranging circuits 104. For example, block 705 of example method 700 includes spoofing detection circuit 120 transmitting a request for measurements 126 to each ranging circuit 104 in a ranging circuit group 102. This request for measurements 126, for example, includes data requesting range measurements 112 over a period of time. In embodiments, each ranging circuit 104 within ranging circuit group 102 is disposed at a different, corresponding locations. For example, two or more ranging circuits 104 of ranging circuit group 102 are disposed at different locations on the same vehicle 350, disposed on different vehicles 350, or both. In response to receiving a request for measurements 126 from spoofing detection circuit 120, each ranging circuit 104 in the ranging circuit group 102 is configured to transmit a respective waveform 110 and measure parameters of reflections of the transmitted waveform 110 during the period of time indicated in the request for measurements 126. As an example, each ranging circuit 104 transmits a waveform 110 sharing one or more parameters with the waveforms 110 transmitted by other ranging circuits 104 in the ranging circuit group 102 but having a start time different from each other waveform 110 transmitted by the other ranging circuits 104. Based on the waveforms 110 transmitted and parameters of reflections measured during the period of time indicated in the request for measurements 126, at block 710, each ranging circuit 104 determines one or more range measurements 112 each indicating the distance of target vehicle 114 from the ranging circuit 104, the angle of the target vehicle 114 relative to the ranging circuit 104, the velocity of the target vehicle 114, or any combination thereof at a corresponding time within the period of time indicated by the request for measurement 126. After determining a set of range measurements 112 over the indicated period of time, each ranging circuit 104 transmits the set of range measurements 112 to spoofing detection circuit 120.

From each set of received range measurements 112, at block 715, spoofing detection circuit 120 randomly or pseudo-randomly selects a predetermined number of range measurements 112. For example, from the period of time indicated in the transmitted requests for measurements 126, spoofing detection circuit 120 randomly selects, pseudo-randomly selects, or both a predetermined number of times. Spoofing detection circuit 120 then selects, from each set of received range measurements 112, the range measurements 112 corresponding to the selected times. Based on these selected range measurements 112, at block 720, spoofing detection circuit 120 estimates a number of estimated locations 332 for a target vehicle 114 during the indicated period of time. As an example, spoofing detection circuit 120 determines a number of estimated locations 332 equal to the predetermined number of range measurements 112 selected from each received set of range measurements 112. According to some embodiments, for example, based on receiving three sets of range measurements 112, spoofing detection circuit 120 triangulates a number of estimated locations 332 equal to the predetermined number of range measurements 112 selected from each received set of range measurements 112. As another example, based on receiving two sets of range measurements 112 each indicating the distance and angle of a target vehicle 114 relative to a corresponding ranging circuit 104, spoofing detection circuit 120 determines a number of estimated locations 332 equal to the predetermined number of range measurements 112 selected from each received set of range measurements 112.

After determining the estimated locations 332, at block 725, spoofing detection circuit 120 is configured to check the spatiotemporal consistency 124 of the estimated locations 332 to determine if the estimated locations 332 are spatially consistent, temporally consistent, or with a traveling vehicle. As an example, spoofing detection circuit 120 compares one or more of the estimated locations 332 to one or more predetermined locations that represent, for example, off-road locations (e.g., locations adjacent to, above, or below a road), medians, areas between lanes of a road, or any combination thereof. Based on one or more estimated locations 332 matching one or more of these predetermined locations, spoofing detection circuit 120 determines that the estimated locations 332 lack spatial consistency, temporal consistency, or both (e.g., are not spatially consistent, temporally consistent, or both with a traveling vehicle). As another example, based on the estimated locations 332, spoofing detection circuit 120 determines an estimated path 334 of the target vehicle 114. For example, for one or more pairs of temporally adjacent locations in the estimated locations 332, spoofing detection circuit 120 determines a corresponding leg 434, 534, 634. Spoofing detection circuit 120 then aggregates these legs 434, 534, 634 to determine an estimated path 334. After determining the estimated path 334, spoofing detection circuit 120 compares the path to one or more predetermined paths. Based on the estimated path 334 deviating from one or more of the predetermined paths by a predetermined degree, spoofing detection circuit 120 determines that the estimated locations 332 and estimated path 334 lack spatial consistency, temporal consistency, or both. In response to determining the estimated locations 332, estimated path 334, or both lack spatial consistency, temporal consistency, or both, spoofing detection circuit 120 determines that one or ranging circuits 104 has received a spoofing signal 118 and performs one or more mitigation actions 128 such as providing an alert to one or more vehicles 350 including a ranging circuit 104 determined to have received the spoofing signal 118, providing an alert to one or more authorities, instructing the processing systems of one or more vehicles 350 to disable one or more functions, instructing the processing systems of one or more vehicles 350 to end on or more applications or any combination thereof.

To detect a spoofing signal transmitted by an attacker, a spoofing detection circuit forms a ranging circuit group by first selecting two or more ranging circuits each disposed at different locations. The spoofing detection circuit then requests and receives a set of measurements over a period of time from each ranging circuit in the ranging circuit group. Based on the received sets of measurements, the spoofing detection circuit estimates one or more locations for a target, a path of the target, or both. The spoofing detection circuit then determines whether the estimated locations or path of the target indicate spatial consistency or temporal consistency. Based on the estimated locations, estimated path, or both not indicating a spatial consistency, temporal consistency, or both, the spoofing detection circuit determines that a spoofing signal was received by the ranging circuit group.

Aspects of the disclosure are defined in the accompanying claims. In a first aspect, there is provided a method comprising: estimating, by a spoofing detection circuit, a plurality of locations of a target vehicle based on a first set of range measurements received from a first ranging circuit and based on at least a second set of range measurements received from a second ranging circuit; and determining, by the spoofing detection circuit, a spoofing signal was received by at least one of the first ranging circuit or the second ranging circuit based on a spatial consistency or a temporal consistency of the plurality of locations. In some embodiments, the first set of range measurements is received from a first location and the second set of range measurements is received from a second location different from the first location. In some embodiments, the first set of range measurements and the second set of range measurements are both received from a first vehicle. In some embodiments, the method of claim further comprises: selecting, from each of the first set of range measurements and the second set of range measurements, a predetermined number of measurements.

In some embodiments, selecting, from each of the first set of range measurements and the second set of range measurements, the predetermined number of measurements comprises selecting the predetermined number of measurements based on a predetermined number of times selected randomly or pseudo-randomly from a period of time represented by the first set of range measurements and the second set of range measurements. In some embodiments, the plurality of locations is estimated based on the predetermined number of measurements from the first set of range measurements and the predetermined number of measurements from the second set of range measurements. In some embodiments, determining the spoofing signal was received comprises: determining a path between a first location of the plurality of locations and a second location of the plurality of locations; and checking the spatial consistency or the temporal consistency of the path. In some embodiments, the method further comprises: disabling a function of a vehicle associated with at least one of the first ranging circuit or the second ranging circuit responsive to determining the spoofing signal was received by the at least one of the first ranging circuit or the second ranging circuit.

In a second aspect there is provided spoofing detection system, comprising: one or more processors, configured to: estimate a plurality of locations of a target vehicle based on a first set of range measurements received from a first ranging circuit and based on at least a second set of range measurements received from a second ranging circuit; and determine a spoofing signal was received by at least one of the first ranging circuit or the second ranging circuit based on a spatiotemporal consistency of the plurality of locations.

In some embodiments, the one or more processors are configured to: transmit to the first ranging circuit and the second ranging circuit a request for measurements indicating a period of time, wherein the first set of range measurements and the second set of range measurements both correspond to the period of time. In some embodiments, the one or more processors are configured to: transmit the request for measurements based on a predetermined amount of time elapsing. In some embodiments, the one or more processors are configured to: transmit the request for measurements based on a vehicle associated with the first ranging circuit or the second ranging circuit being at a predetermined location. In some embodiments, the one or more processors are configured to: select, from each of the first set of range measurements and the second set of range measurements, a predetermined number of measurements.

In some embodiments, the one or more processors are configured to: select the predetermined number of measurements based on a predetermined number of times selected randomly or pseudo-randomly from a period of time represented by the first set of range measurements and the second set of range measurements. In some embodiments, the one or more processors are configured to estimate the plurality of locations based on the predetermined number of measurements from the first set of range measurements and the predetermined number of measurements from the second set of range measurements. In some embodiments, the one or more processors are implemented in a vehicle. In some embodiments, the one or more processors are implemented in one or more servers.

In a third aspect, there is provided a spoofing detection system, comprising: a first ranging circuit configured to: transmit a first waveform based on receiving a request for measurements indicating a period of time; and determine a first set of range measurements corresponding to the period of time based on the first waveform; and a second ranging circuit configured to: transmit a second waveform based on receiving the request for measurements indicating the period of time, wherein the second waveform has a start time different from the first waveform; and determine a second set of range measurements corresponding to the period of time based on the first waveform.

In some embodiments, the first ranging circuit is disposed on a first vehicle and the second ranging circuit is disposed on a second vehicle different from the first vehicle. In some embodiments, the first ranging circuit is disposed on at a first location on a vehicle and the second ranging circuit is disposed at a second location on the vehicle, wherein the first location is different from the second location.

In some embodiments, certain aspects of the techniques described above may be implemented by one or more processors of a processing system executing software. The software comprises one or more sets of executable instructions stored or otherwise tangibly embodied on a non-transitory computer-readable storage medium. The software can include the instructions and certain data that, when executed by the one or more processors, manipulate the one or more processors to perform one or more aspects of the techniques described above. The non-transitory computer-readable storage medium can include, for example, a magnetic or optical disk storage device, solid-state storage devices such as Flash memory, a cache, random access memory (RAM) or other non-volatile memory device or devices, and the like. The executable instructions stored on the non-transitory computer-readable storage medium may be in source code, assembly language code, object code, or other instruction format that is interpreted or otherwise executable by one or more processors.

A computer-readable storage medium may include any storage medium, or combination of storage media, accessible by a computer system during use to provide instructions and/or data to the computer system. Such storage media can include but is not limited to, optical media (e.g., compact disc (CD), digital versatile disc (DVD), Blu-Ray disc), magnetic media (e.g., floppy disc, magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer-readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory) or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed is not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the

## EP 4 711 801 A1

scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

## Claims

1. A method comprising:

   estimating, by a spoofing detection circuit, a plurality of locations of a target vehicle based on a first set of range measurements received from a first ranging circuit and based on at least a second set of range measurements received from a second ranging circuit; and
   determining, by the spoofing detection circuit, a spoofing signal was received by at least one of the first ranging circuit or the second ranging circuit based on a spatial consistency or a temporal consistency of the plurality of locations.

2. The method of claim 1, wherein the first set of range measurements is received from a first location and the second set of range measurements is received from a second location different from the first location.

3. The method of claim 1 or 2, wherein the first set of range measurements and the second set of range measurements are both received from a first vehicle.

4. The method of any preceding claim, further comprising:
   selecting, from each of the first set of range measurements and the second set of range measurements, a predetermined number of measurements.

5. The method of claim 4, wherein selecting, from each of the first set of range measurements and the second set of range measurements, the predetermined number of measurements comprises selecting the predetermined number of measurements based on a predetermined number of times selected randomly or pseudo-randomly from a period of time represented by the first set of range measurements and the second set of range measurements.

6. The method of claim 4 or 5, wherein the plurality of locations is estimated based on the predetermined number of measurements from the first set of range measurements and the predetermined number of measurements from the second set of range measurements.

7. The method of any preceding claim, wherein determining the spoofing signal was received comprises:

   determining a path between a first location of the plurality of locations and a second location of the plurality of locations; and
   checking the spatial consistency or the temporal consistency of the path.

8. The method of any preceding claim, further comprising:
   disabling a function of a vehicle associated with at least one of the first ranging circuit or the second ranging circuit responsive to determining the spoofing signal was received by the at least one of the first ranging circuit or the second ranging circuit.

9. A spoofing detection system, comprising:
   one or more processors, configured to:

   estimate a plurality of locations of a target vehicle based on a first set of range measurements received from a first ranging circuit and based on at least a second set of range measurements received from a second ranging circuit;

14

and
determine a spoofing signal was received by at least one of the first ranging circuit or the second ranging circuit based on a spatiotemporal consistency of the plurality of locations.

10. The spoofing detection system of claim 9, wherein the one or more processors are configured to:
transmit to the first ranging circuit and the second ranging circuit a request for measurements indicating a period of time, wherein the first set of range measurements and the second set of range measurements both correspond to the period of time.

11. The spoofing detection system of claim 10, wherein the one or more processors are configured to:
transmit the request for measurements based on a predetermined amount of time elapsing.

12. The spoofing detection system of claim 10 or 11, wherein the one or more processors are configured to:
transmit the request for measurements based on a vehicle associated with the first ranging circuit or the second ranging circuit being at a predetermined location.

13. The spoofing detection system of any of claims 9 to 12, wherein the one or more processors are configured to:
select, from each of the first set of range measurements and the second set of range measurements, a predetermined number of measurements.

14. The spoofing detection system of claim 13, wherein the one or more processors are configured to:
select the predetermined number of measurements based on a predetermined number of times selected randomly or pseudo-randomly from a period of time represented by the first set of range measurements and the second set of range measurements.

15. The spoofing detection system of claim 13 or 14, wherein the one or more processors are configured to estimate the plurality of locations based on the predetermined number of measurements from the first set of range measurements and the predetermined number of measurements from the second set of range measurements.

FIG. 1

FIG. 2

SPOOFING DETECTION CIRCUIT
120

REQUEST RANGE MEASUREMENTS FROM RANGING GROUP
305

REQUEST FOR MEASUREMENTS
126

SELECT NUMBER OF MEASUREMENTS FROM EACH SET OF RANGE MEASUREMENTS
315

DETERMINE ESTIMATED LOCATIONS BASED ON SELECTED MEASUREMENTS
325

ESTIMATED LOCATIONS
332

CHECK SPATIOTEMPORAL CONSISTENCY OF ESTIMATED LOCATIONS
325

ESTIMATED PATH
334

SERVERS
346

NETWORK
348

350

**FIG. 3**

EP 4 711 801 A1

**FIG. 4**

EP 4 711 801 A1

**FIG. 5**

EP 4 711 801 A1

**FIG. 6**

EP 4 711 801 A1

700

TRANSMIT REQUEST FOR
MEASUREMENTS INDICATING PERIOD
OF TIME ⎯705

↓

RECEIVE SETS OF RANGE
MEASUREMENTS CORRESPONDING TO
PERIOD OF TIME ⎯710

↓

SELECT PREDETERMINED NUMBER OF
RANGE MEASUREMENTS FROM EACH
SET OF RANGE MEASUREMENTS ⎯715

↓

DETERMINE ESTIMATED LOCATIONS
BASED ON SELECTED RANGE
MEASUREMENTS ⎯720

↓

CHECK SPATIOTEMPORAL
CONSISTENCY OF ESTIMATED
LOCATIONS ⎯725

# FIG. 7

Europäisches
Patentamt

European
Patent Office

Office européen
des brevets

## EUROPEAN SEARCH REPORT

**Application Number**

**EP 25 19 7248**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 571 913 B2 (APTIV TECH LTD [BB]) 25 February 2020 (2020-02-25) | 1-11, 13-15 | INV. G01S7/00 |
| A | * column 3, line 11 - line 28 * | 12 | G01S7/02 |
| | * column 4, line 20 - line 33 * | | G01S7/48 |
| | * column 4, line 43 - line 67 * | | G01S13/34 |
| | * column 5, line 26 - line 67 * | | G01S13/46 |
| | * figures 1-2 * | | G01S13/72 |
| | ----- | | G01S13/87 |
| X | US 11 273 841 B2 (TOYOTA RES INST INC [US]) 15 March 2022 (2022-03-15) | 1-6,8-15 | G01S13/931 G01S17/34 |
| A | * column 1, line 23 - line 25 * | 7 | G01S17/48 |
| | * column 4, line 42 - line 67 * | | G01S17/66 |
| | * column 7, line 11 - line 24 * | | G01S17/87 |
| | * column 8, line 19 - line 49 * | | G01S17/931 |
| | * column 9, line 19 - line 35 * | | |
| | * column 9, line 63 - column 10, line 55 * | | ADD. |
| | * figures 1-9 * | | G01S13/58 |
| | ----- | | G01S17/58 |

**TECHNICAL FIELDS SEARCHED (IPC)**

G01S

The present search report has been drawn up for all claims

| Place of search | Date of completion of the search | Examiner |
|---|---|---|
| Munich | 15 January 2026 | Köppe, Maro |

EPO FORM 1503 03.82 (P04C01)

## ANNEX TO THE EUROPEAN SEARCH REPORT
## ON EUROPEAN PATENT APPLICATION NO.

EP 25 19 7248

15-01-2026

| Patent document cited in search report | | Publication date | Patent family member(s) | | Publication date |
|---|---|---|---|---|---|
| US 10571913 | B2 | 25-02-2020 | CN | 109937389 A | 25-06-2019 |
| | | | CN | 116520346 A | 01-08-2023 |
| | | | EP | 3494444 A1 | 12-06-2019 |
| | | | US | 2018039269 A1 | 08-02-2018 |
| | | | US | 2020192361 A1 | 18-06-2020 |
| | | | US | 2022163964 A1 | 26-05-2022 |
| | | | WO | 2018026486 A1 | 08-02-2018 |
| US 11273841 | B2 | 15-03-2022 | NONE | | |

EPO FORM P0459